# EUROPÄISCHE PATENTSCHRIFT

(11) **EP 4 516 701 B1**
(45) Veröffentlichungstag und Bekanntmachung des Hinweises auf die Patenterteilung: **17.12.2025**
(21) Anmeldenummer: 24195848.7
(22) Anmeldetag: 22.08.2024
(51) Int. Cl.: B65G 23/44, B65G 43/02

(54) **KETTENAGGREGAT SOWIE VERFAHREN ZU DESSEN BETRIEB**
CHAIN ASSEMBLY AND METHOD FOR OPERATING SAME
UNITÉ DE CHAÎNE ET SON PROCÉDÉ DE FONCTIONNEMENT

(30) Priorität: 29.08.2023 DE 102023123206
(43) Veröffentlichungstag der Anmeldung: 05.03.2025
(73) Patentinhaber: G. Kraft Maschinenbau GmbH, 33397 Rietberg-Mastholte (DE)
(72) Erfinder: Stallein, Marius, 33098 Paderborn (DE)
(74) Vertreter: Bauer PSU PartG mbB

(56) Entgegenhaltungen:
- BE-A7- 1 004 934
- CN-A- 115 367 417
- FR-A1- 3 005 234
- US-A1- 2014 190 796

## Beschreibung

Die vorliegende Anmeldung betrifft ein Kettenaggregat zum Vortrieb von Werkstücken entlang einer Bearbeitungsstrecke gemäß dem Oberbegriff von Anspruch 1. Ferner betrifft die vorliegende Anmeldung ein Verfahren zum Betrieb eines Kettenaggregats gemäß dem Oberbegriff von Anspruch 13.

Ein Kettenaggregat gemäß der vorliegenden Anmeldung kann insbesondere in einem sogenannten "Doppelendprofiler" zur Anwendung kommen. In einem Doppelendprofiler werden typischerweise mehrere Kettenaggregate, in aller Regel zwei parallel zueinander orientierte, paarweise angeordnete Kettenaggregate, gemeinsam verwendet, um Werkstücke entlang der Bearbeitungsstrecke zu bewegen. Sofern mehrere Kettenaggregate verwendet werden, sind diese in aller Regel parallel zueinander orientiert. Auch andere Vorrichtungen können eines oder mehrere Kettenaggregate verwenden, um Werkstücke entlang einer Bearbeitungsstrecke zu transportieren.

Für den Doppelendprofiler ist es charakteristisch, dass die transportierten Werkstücke entlang mehrerer Seiten gleichzeitig bearbeitet werden können, beispielsweise entlang einander gegenüberliegender seitlicher Kanten des jeweiligen Werkstücks. Entsprechend ist es für den Vorschub der Werkstücke von besonderer Bedeutung, dass diese sich während ihrer Bewegung entlang der Bearbeitungsstrecke nicht um eine Hochachse (Vertikalachse) verdrehen. Sofern mehrere Kettenaggregate zum Einsatz kommen, ist es entsprechend wesentlich, dass die Kettenaggregate genau synchron laufen, da es bei einer (minimalen) Abweichung zwischen den Geschwindigkeiten der Kettenaggregate zwangsläufig zu einer Verdrehung eines auf beiden Kettenaggregat gelagerten Werkstücks um die Hochachse kommen würde, wodurch die Bearbeitung der seitlichen Kanten des jeweiligen Werkstücks gar nicht oder zumindest nicht in ausreichender Qualität möglich wäre.

In der Praxis ist es normal, dass die Kette eines jeweiligen Kettenaggregats über die Zeit Kettenspannung verliert, sodass die Kettenspannung mittels eines Spannsystems nachgestellt werden muss. Sofern ein Unterschreiten einer bestimmten Kettenspannung festgestellt wird, kann mittels Beeinflussung eines Stellelements ein Spannelement des Spannsystems nachgespannt werden, wodurch die von dem Spannelement ausgeübte Spannkraft vergrößert und folglich die Kettenspannung gesteigert werden.

### Stand der Technik

Kettenaggregate der vorstehend beschriebenen Art sind im Stand der Technik bereits bekannt. Aus der BE1004934A7 sind beispielsweise die Oberbegriffe der unabhängigen Ansprüche 1 und 13 bekannt. Insbesondere ist es üblich, dass die Kettenspannung bei einer turnusmäßigen Wartung des jeweiligen Kettenaggregats geprüft und gegebenenfalls manuell nachgestellt wird.

Diese Vorgehensweise hat den Nachteil, dass die Kettenspannung bereits vor der nächsten fälligen Wartung derart abfällt, dass eine Abweichung zwischen den Betrieben des jeweilig betroffenen Kettenaggregats und einem zweiten Kettenaggregat des jeweiligen Doppelendprofilers auftritt. Dies kann gemäß der einleitenden Erläuterung zu einer fehlerhaften Bearbeitung der Werkstücke führen. Schlimmstenfalls muss eine Vielzahl von Werkstücken, die über einen Bearbeitungszeitraum mit dem Doppelendprofiler bearbeitet wurden, als Ausschuss entsorgt werden, da die Qualität bei der Einbringung der jeweiligen Profile infolge einer ungewollten Schrägstellung der Werkstücke auf den beiden Kettenaggregaten nicht auf einem gewünschten Niveau gehalten werden konnte.

### Aufgabe

Entsprechend liegt der vorliegenden Anmeldung die Aufgabe zugrunde, ein Kettenaggregat bereitzustellen, dessen Betrieb gegenüber dem Stand der Technik mit einem geringeren Risiko für einen Fehlbetrieb möglich ist.

### Lösung

Die zugrunde liegende Aufgabe wird erfindungsgemäß mittels eines Kettenaggregats mit den Merkmalen des Anspruchs 1 gelöst. Vorteilhafte Ausgestaltungen ergeben sich aus den zugehörigen Unteransprüchen sowie der Beschreibung und dem Ausführungsbeispiel.

Das Kettenaggregat umfasst einen Antriebskopf mit einem um eine, vorzugsweise horizontale, Drehachse drehantreibbaren Kettenrad. Das Kettenrad ist mittels eines Drehantriebs drehantreibbar, wobei der Drehantrieb beispielsweise und vorzugsweise von einem Elektromotor gebildet sein kann. Der Drehantrieb kann mit einer Steuereinrichtung zusammenwirken, der den Betrieb des Drehantriebs und mithin des Kettenrades steuert. Ferner umfasst das Kettenaggregat einen Umlenkkopf, der eine Umlenkeinheit umfasst, an der eine Kette des Kettenaggregats umlenkbar ist. Die Umlenkeinheit kann beispielsweise und vorzugsweise von einer Umlenkscheibe oder einem um eine, vorzugsweise horizontale, Drehachse drehbaren Umlenkrad gebildet sein. Die Umlenkscheibe ist dazu eingerichtet, dass die Kette an der Umlenkscheibe abrollend oder gleitend führbar ist, beispielsweise und vorzugweise auf einem Kreisbogen in einem, vorzugsweise konstanten, Radius um eine, vorzugsweise horizontale, Umlenkachse. Wenn die Umlenkeinheit von einem Umlenkrad gebildet ist, ist das Umlenkrad in aller Regel passiv, das heißt es ist als solches nicht aktiv drehantreibbar.

Das Kettenrad und die Umlenkeinheit sind bevorzugt einander gegenüberliegend angeordnet und definieren auf diese Weise zwei gegenüberliegende Enden des Kettenaggregats. Typischerweise umfasst das Kettenaggregat neben dem Kettenrad und der Umlenkeinheit keine weiteren Räder, wenngleich dies grundsätzlich denkbar ist. Der häufigste Fall ist, dass das Kettenrad und die Umlenkeinheit zwei einander gegenüberliegende Enden des Kettenaggregats bilden und eine Kette um das Kettenrad und die Umlenkeinheit umläuft. Das Kettenaggregat ist typischerweise horizontal orientiert, wobei sich die Drehachse des Kettenrads und - je nach Ausführung der Umlenkeinheit - die Umlenkachse oder Drehachse der Umlenkeinheit gemeinsam in einer horizontal orientierten Ebene befinden. Ein derart orientiertes Kettenaggregat dient dazu, Werkstücke mittels der Kette entlang einer horizontalen Bearbeitungsstrecke zu transportieren.

Die Kette des Kettenaggregats ist in sich geschlossen bzw. endlos und umspannt das Kettenrad und die Umlenkeinheit. Die Kette kann beispielsweise an einer innenliegenden Unterseite profiliert ausgebildet sein, sodass sie bestimmungsgemäß mit dem Kettenrad und/oder der Umlenkeinheit zusammenwirken kann. Insbesondere kann die Unterseite der Kette abgestimmt zu dem Kettenrad ausgebildet sein, sodass ein Drehmoment von dem Kettenrad auf die Kette übertragbar und die Kette hierdurch antreibbar ist. Alternativ oder zusätzlich ist es denkbar, dass an der Kette seitlich Formschlussmittel, beispielsweise in Form von Bolzen, vorstehen, die an dem Kettenrad und/oder der Umlenkeinheit gegriffen werden, um einen Formschluss zu erwirken und auf diese Weise einen Kraftfluss zwischen der Kette und dem Kettenrad bzw. der Umlenkeinheit zu gewährleisten. Weitere Varianten sind ebenfalls denkbar und an sich bekannt. Ferner kann eine außenliegende Oberseite der Kette mit einer Profilierung und/oder Formschlusselementen ausgebildet sein, die dazu vorgesehen und eingerichtet sind, mit Werkstücken einzugreifen, sodass diese sicher auf der Kette aufliegen. Hierbei kann es von besonderer Bedeutung sein, dass es im Zuge eines Transports eines Werkstücks nicht zu unbeabsichtigten Relativbewegungen zwischen dem Werkstück und der Kette kommt. Insbesondere kann die Kette an ihrer Oberseite mit nach oben vorstehenden Nocken oder dergleichen ausgestattet sein. Die Kette kann beispielsweise und vorzugsweise von einer Rollenkette gebildet sein.

Des Weiteren umfasst das Kettenaggregat ein Spannsystem, mittels dessen die Kette gespannt werden kann bzw. auf Spannung gehalten wird. Das Spannsystem umfasst mindestens ein Spannelement, mindestens ein Stellelement zur Einstellung einer Spannkraft des Spannelements, ein Widerlager, gegen das sich das Spannelement an seinem ersten Ende abstützt, eine Übertragungseinrichtung, gegen die sich das Spannelement an seinem zweiten Ende abstützt, und mindestens zwei an die Übertragungseinrichtung angeschlossene, sich parallel zueinander erstreckende Führungsachsen. Das Spannelement kann insbesondere von einem Federelement gebildet sein, das beispielsweise von einer vorgespannten Druckfeder gebildet ist. Das Widerlager dient lediglich dazu, dass sich das Spannelement mit seinem ersten Ende abstützen kann. Die Ausübung der Spannkraft erfolgt bestimmungsgemäß in Richtung der Übertragungseinrichtung, an dem sich das Spannelement mit seinem dem ersten Ende gegenüberliegenden zweiten Ende abstützt.

Die Übertragungseinrichtung kann beispielsweise von einer Platte gebildet sein, die beispielsweise von Stahl gebildet ist. Von dort wird die Spannkraft auf die Führungsachsen und schließlich über die Führungsachsen auf das Kettenrad oder die Umlenkeinheit mittelbar oder unmittelbar übertragen, sodass das Kettenrad bzw. die Umlenkeinheit gegen die Kette nach außen gedrückt wird. Vorzugsweise ist die Übertragungseinrichtung ausschließlich mittels der Führungsachsen gelagert, sodass die von dem Spannelement ausgeübte Spannkraft vollständig auf die beiden Führungsachsen abgeleitet wird. Anschlussstellen der Führungsachsen, an denen die Führungsachsen an die Übertragungseinrichtung angeschlossen sind, bilden Auflager für die Übertragungseinrichtung, sodass eine auf die Übertragungseinrichtung ausgeübte Kraft (insbesondere die Spannkraft des Spannelements) zu den Anschlussstellen abgeleitet wird, an denen die Führungsachsen Auflager der Übertragungseinrichtung bilden. Hierbei ist bevorzugt, wenn die Führungsachsen übereinander, das heißt sich gemeinsam in einer vertikalen Ebene erstreckend, angeordnet sind. Die Übertragungseinrichtung ist bei dieser Ausgestaltung bevorzugt vertikal orientiert. Die Führungsachsen können beispielsweise von langgestreckten Stäben gebildet sein, die sich ausgehend von der Übertragungseinrichtung erstrecken. Insbesondere können von der Übertragungseinrichtung abgewandte Enden mit einer linear beweglichen Lagereinrichtung zusammenwirken, mittels der das Kettenrad oder die Umlenkeinheit gelagert ist, je nachdem, ob die Spanneinrichtung mit dem Kettenrad oder der Umlenkeinheit wirkverbunden ist. Die Lagereinrichtung kann beispielsweise von einem Gleitlager gebildet sein.

Infolge der wirkenden Spannkraft des Spannelements wird folglich die Kette gespannt. Umso höher die Spannkraft des Spannelements ist, desto stärker ist die Kette gespannt. Da das Kettenrad typischerweise zwecks Zusammenwirkung mit dem Drehantrieb ortsfest angeordnet ist, wirkt das Spannsystem bevorzugt mit der Umlenkeinheit zusammen, das vorzugsweise mittels einer Lagereinrichtung, vorzugweise horizontal, linear beweglich gelagert und mittels der Führungsachsen entlang einer Bewegungsachse der Lagereinrichtung beweglich ist. Die Bewegungsachse erstreckt sich bevorzugt parallel zu Längsachsen der Führungsachse sowie weiter vorzugsweise parallel zu einer Wirkungsachse des Spannelements.

Mittels des Stellelements kann die Spannkraft des Spannelements verändert werden. Hierbei ist es beispielsweise denkbar, dass das Stellelement von einer Mutter gebildet ist, die entweder selbst das Widerlager für das Spannelement bildet oder mittels der eine Position des Widerlagers entlang einer Wirkungsachse des Spannelements veränderbar ist. Ein als Mutter ausgebildetes Stellelement kann besonders einfach mittels einer Verdrehung um eine Schraubachse entlang eines Gewindebolzens, an dem die Mutter kämmend gelagert ist, axial bewegt werden und hierdurch das Widerlager für das Spannelement entlang einer Achse des Gewindebolzens verschieben. Letztere kann insbesondere parallel zu einer Wirkungsachse des Spannelements orientiert sein. Insbesondere kann das Stellelement derart ausgebildet sein, dass es dazu geeignet ist, einen Abstand zwischen Abstützstellen, an denen sich das Spannelement mit seinen beiden Enden abstützt zu verändern, wodurch sich die in dem Spannelement wirkende Spannkraft verändert. Die eine Abstützstelle ist der Übertragungseinrichtung und die andere Abstützstelle an dem Widerlager ausgebildet.

Das erfindungsgemäße Kettenaggregat ist durch eine Dehnungsmesseinrichtung gekennzeichnet, die an der Übertragungseinrichtung angeordnet ist. Die Dehnungsmesseinrichtung ist dazu eingerichtet und vorgesehen, Informationen betreffend eine Verformung der Übertragungseinrichtung zu erfassen. Die Übertragungseinrichtung verformt sich infolge der Spannkraft, die von dem Spannelement in die Übertragungseinrichtung eingeleitet und mittels der Übertragungseinrichtung auf die beiden Führachsen übertragen wird. Die vorliegende Erfindung folgt dabei der Überlegung, dass eine Veränderung in der Kettenspannung sich in einer Veränderung der Spannkraft des Spannelements niederschlägt, was wiederum dazu führt, dass sich eine Krafteinwirkung auf die Übertragungseinrichtung verändert. Eine solche Veränderung in der Beaufschlagung der Übertragungseinrichtung mit Kräften führt unweigerlich dazu, dass eine Verformung bzw. ein Verformungszustand der Übertragungseinrichtung sich verändert. Diese Veränderung kann mittels der Dehnungsmesseinrichtung erfasst werden. Im Ergebnis ist eine Veränderung der Kettenspannung mittels einer Veränderung der Verformung der Übertragungseinrichtung bzw. mittels einer Veränderung von Messwerten der Dehnungsmesseinrichtung erkennbar. Dementsprechend bietet die Dehnungsmesseinrichtung ein Mittel, um die Kettenspannung der Kette des Kettenaggregats (indirekt) fortwährend zu überwachen und bei einer Veränderung der Kettenspannung bedarfsgerecht Maßnahmen ergreifen zu können, die eine fehlerhafte Bearbeitung von Werkstücken verhindern. Die Dehnungsmesseinrichtung kann beispielsweise nach dem Prinzip einer Widerstandsmessung arbeiten, wobei Verformungen der Übertragungseinrichtung dadurch erfasst werden, dass sich ein elektrischer Widerstand eines Leiters der Dehnungsmesseinrichtung verändert. Dies ist beispielsweise der Fall, wenn die Dehnungsmesseinrichtung mindestens einen Dehnungsmessstreifen (DMS) umfasst.

Die Vorteile des erfindungsgemäßen Kettenaggregats bestehen demzufolge darin, den Betrieb des Kettenaggregats besser überwachen zu können und mithin einen unplanmäßigen Betriebszustand des Kettenaggregats frühzeitig, bestenfalls präventiv, erkennen und gegensteuern zu können. Ein Doppelendprofiler, der mit einem solchen Kettenaggregat ausgestattet ist, unterliegt demzufolge einem deutlich geringeren Risiko, einen potenziell hohen wirtschaftlichen Schaden infolge eines Ausschusses einer Vielzahl von Werkstücken zu erleiden.

In einer vorteilhaften Ausgestaltung des Kettenaggregats ist eine Wirkungsachse der Spannkraft des Spannelements parallel zu Längsachsen der Führungsachsen orientiert. Dies hat den Vorteil, dass die Spannkraft in den Führungsachsen zumindest im Wesentlichen lediglich Normalkräfte auslöst, sodass die Führungsachsen frei von Querkräften und demzufolge Biegemomenten bleiben. Dies ist für die Konstruktion der Führungsachsen und mithin des gesamten Spannsystems vorteilhaft.

Das Kettenaggregat weiter ausgestaltend befinden sich an Anschlussstellen der Führungsachsen, an denen die Führungsachsen an die Übertragungseinrichtung angeschlossen sind, an einer Rückseite der Übertragungseinrichtung. Die Rückseite Übertragungseinrichtung bezeichnet dabei diejenige Seite, die einer Vorderseite der Übertragungseinrichtung gegenüberliegt, wobei die Vorderseite der Übertragungseinrichtung diejenige Seite beschreibt, an der sich eine Abstützstelle befindet, an der sich das Spannelement an der Übertragungseinrichtung abstützt. Diese Abstützstelle dient dem Spannelement dazu, sich mit seinem zweiten Ende an der Übertragungseinrichtung abzustützen, sodass die Spannkraft des Spannelements an der Abstützstelle in die Übertragungseinrichtung eingeleitet wird. Mit anderen Worten stützt sich das Spannelement an der Vorderseite der Übertragungseinrichtung mit seinem zweiten Ende ab, während die Führungsachsen bevorzugt an der gegenüberliegenden Rückseite der Übertragungseinrichtung angeschlossen sind. Die Führungsachsen bilden demzufolge im statischen Sinne an Anschlussstellen, an denen die Führungsachsen an die Übertragungseinrichtung angeschlossen sind, Auflager für die Übertragungseinrichtung, die mit der von dem Spannelement ausgeübten Spannkraft belastet werden.

In einer bevorzugten Ausgestaltung wirkt die Übertragungseinrichtung in statischer Hinsicht nach der Art eines Balkens, der auf zwei Stützen gelagert ist. Insbesondere können die Führungsachsen an einander gegenüberliegenden Enden der Übertragungseinrichtung angeschlossen sein, während sich das Spannelement in einem Bereich zwischen den Führungsachsen an der Übertragungseinrichtung abstützt. Bevorzugt stützt sich das Spannelement zumindest im Wesentlichen in Feldmitte zwischen den Anschlussstellen der Führungsachsen ab, sodass eine Ableitung der Spannkraft mittels der Übertragungseinrichtung zu den Führungsachsen zumindest im Wesentlichen hälftig auf beide Führungsachsen stattfindet. In Fällen, in denen eine solche Anordnung der Abstützstelle des Spannelements nicht möglich ist, ist es ebenso denkbar, dass sich die Abstützstelle nicht in Feldmitte zwischen den Führungsachsen, sondern außermittig befindet. Dies kann beispielsweise notwendig sein, wenn der für das Spannsystem zur Verfügung stehende Bauraum eine außermittige Abstützung des Spannelements an der Übertragungseinrichtung erfordert.

Weiterhin kann eine solche Ausgestaltung des Kettenaggregats vorteilhaft sein, bei der die Dehnungsmesseinrichtung auf der Rückseite der Übertragungseinrichtung angeordnet ist. Da sich die Rückseite gemäß obiger Erläuterung gegenüberliegend von der Vorderseite der Übertragungseinrichtung befindet, an der sich wiederum die Abstützstelle für das Spannelement befindet, ist infolge einer positiven Spannkraft (Druckkraft) eine Durchbiegung der Übertragungseinrichtung in Richtung der Rückseite der Übertragungseinrichtung zu erwarten. Entsprechend sind an der Rückseite zur Ausbildung Zugspannungen erwartbar, die eine Verformung der Übertragungseinrichtung an der Rückseite in Form einer Streckung hervorrufen. Entsprechend ist es zu erwarten, dass bei einem bestimmungsgemäßen Gebrauch des Spannsystems die an der Rückseite der Übertragungseinrichtung angeordnete Dehnungsmesseinrichtung positive Dehnungen, das heißt Streckungen, misst. Die Anordnung der Dehnungsmesseinrichtung an der Rückseite der Übertragungseinrichtung hat den Vorteil, dass sie unabhängig von der Abstützstelle für das Spannelement, die sich an der Vorderseite der Übertragungseinrichtung befindet, positioniert werden kann.

In besonders bevorzugter Weise kann sich die Dehnungsmesseinrichtung in Feldmitte zwischen Anschlussstellen der Führungsachsen befinden, da dort in aller Regel die betragsmäßig größten Biegemomente und folglich auch die betragsmäßig größten Verformungen zu erwarten sind. Dies hat den Vorteil, dass mittels der Dehnungsmesseinrichtung erfassten Messwerte ebenfalls betragsmäßig am stärksten ausschlagen und sich deutlich oberhalb etwaiger Messungenauigkeiten der jeweiligen Dehnungsmesseinrichtung bewegen. Sofern gemäß vorstehender Erläuterung die Abstützstelle des Spannelements an der Vorderseite der Übertragungseinrichtung ebenfalls in Feldmitte angeordnet ist, ist es besonders zu bevorzugen, wenn sich die Dehnungsmesseinrichtung gegenüberliegend von der Abstützstelle, das heißt entlang einer Wirkungsachse der Spannkraft des Spannelements an der Rückseite der Übertragungseinrichtung befindet.

In einer weiterhin vorteilhaften Ausgestaltung des Kettenaggregats umfasst selbiges eine Auswerteinrichtung, die in Daten übertragender Weise mit der Dehnungsmesseinrichtung verbunden ist. Beispielsweise kann die Auswerteinrichtung von einer Datenverarbeitungsanlage mit einem Speicher und einem Mikroprozessor zur Ausführung von Programmen gebildet sein. Die Auswerteinrichtung ist dazu vorgesehen und eingerichtet, mittels der Dehnungsmesseinrichtung erfasste Informationen zu erhalten und zu verarbeiten. Entsprechende Informationen können mittels der Auswerteinrichtung dahingehend verarbeitet werden, dass beispielsweise eine grafische Wiedergabe für einen Maschinenführer erfolgt. Zusätzlich oder alternativ ist es denkbar, dass mittels der Auswerteinrichtung aus den erfassten Messwerten der Dehnungsmesseinrichtung direkt eine Umrechnung betreffend die Kettenspannung der Kette des Kettenaggregats erfolgt, sodass eine quantitative Einschätzung betreffend die Kettenspannung durch einen Maschinenführer des Kettenaggregats möglich ist. Beispielsweise erlaubt dies eine Beurteilung durch den Maschinenführer, ob die angezeigte Kettenspannung sich innerhalb vorgegebener Grenzwerte befindet.

Entsprechend kann es von besonderem Vorteil sein, wenn die Auswerteinrichtung dazu vorgesehen und eingerichtet ist, fortwährend eine Ist-Verformung der Übertragungseinrichtung auszuwerten und hieraus auf eine effektiv wirkende Spannkraft des Spannelements zum Zeitpunkt der Auswertung zu schließen. Ergänzend kann es vorteilhaft sein, wenn die Auswerteinrichtung dazu vorgesehen und eingerichtet ist, automatisch eine Information abzusetzen, wenn die Spannkraft der Kette einen vorgegebenen Mindestwert unterschreitet. Diese Beurteilung der Spannkraft kann lediglich implizit erfolgen, wobei effektiv die Auswerteinrichtung nicht die Spannkraft der Kette als solche, sondern die Ist-Verformung der Übertragungseinrichtung überwacht und beispielsweise mit einem vorgegebenen Mindestwert fortwährend vergleicht. Ferner ist es ebenso denkbar, dass zusätzlich zu einer Überprüfung mindestens eines Mindestwerts auch eine Überprüfung betreffend mindestens einen Höchstwert stattfindet. Mithin ist es denkbar, dass die Kettenspannung beispielsweise infolge von Temperaturänderungen unbeabsichtigt ansteigt und einen technisch günstigen Wert übersteigt. Eine dahingehende Überprüfung könnte ebenfalls mittels der Dehnungsmesseinrichtung messtechnisch erfasst und mittels einer Auswerteinrichtung verarbeitet werden.

Ferner kann eine solche Ausgestaltung des Kettenaggregats besonders vorteilhaft sein, bei der dieses einen Aktor umfasst, der mit dem Stellelement zusammenwirkt. Der Aktor ist dazu vorgesehen und eingerichtet, auf das Stellelement einzuwirken, sodass sich die Spannkraft des Spannelements verändert. Ein solcher Aktor ermöglicht es, dass eine Veränderung der Spannkraft des Spannelements vorgenommen wird, ohne dass ein manueller Zugriff auf das Stellelement erforderlich ist.

In einer besonders vorteilhaften Ausgestaltung kann ein solcher Aktor in Daten übertragender Weise mit einer vorstehend als vorteilhaft beschriebenen Auswerteinrichtung zusammenwirken und verbunden sein, wobei die Auswerteinrichtung dazu vorgesehen und eingerichtet ist, den Aktor anzusteuern, um eine Beeinflussung des Stellelements und mithin der Spannkraft des Spannelements zu erwirken. Insbesondere für den Fall, dass die Spannkraft des Spannelements einen vorgegebenen Mindestwert unterschreitet, kann die Auswerteinrichtung den Aktor dahingehend ansteuern, dass dieser das Stellelement verstellt und hierdurch die Spannkraft des Spannelements erhöht. Diese Erhöhung schlägt sich sodann in einer betragsmäßig größeren Verformung der Übertragungseinrichtung nieder, die wiederum mittels der Dehnungsmesseinrichtung erfasst wird. Hierdurch kann die Auswerteinrichtung auf einen Anstieg der Spannkraft schließen, sodass diese sich (wieder) oberhalb des Mindestwerts befindet. Die Dehnungsmesseinrichtung bildet bei dieser Ausgestaltung in Zusammenwirkung mit der Auswerteinrichtung, dem Aktor und dem Stellelement folglich eine Steuerung, bei der der Verformungszustand der Übertragungseinrichtung die Eingangsgröße darstellt, die mittels der Dehnungsmesseinrichtung ("Eingabegerät") gemessen wird. Die hieraus erzeugte Information wird an die Auswerteinrichtung ("Verarbeitungseinheit") geleitet und dort verarbeitet, insbesondere in Form eines Vergleichs der Eingangsgröße mit einer Sollgröße. Daraus ergibt sich eine Handlungsanweisung für den Aktor ("Ausgabegerät"), dessen Betätigung Einfluss auf die Eingangsgröße nimmt.

In verfahrenstechnischer Hinsicht wird die zugrunde liegende Aufgabe erfindungsgemäß mittels eines Verfahrens mit den Merkmalen des Anspruchs 13 gelöst. Vorteilhafte Ausgestaltungen ergeben sich aus den zugehörigen Unteransprüchen sowie der Beschreibung und dem Ausführungsbeispiel.

Das Verfahren dient zum Betrieb eines Kettenaggregats gemäß der vorliegenden Erfindung, das entsprechend mit einer Dehnungsmesseinrichtung ausgestattet ist. Dabei sieht das Verfahren erfindungsgemäß vor, dass mittels der Dehnungsmesseinrichtung fortwährend Informationen betreffend eine Verformung der Übertragungseinrichtung erfasst werden, die sich infolge der Einwirkung der Spannkraft des Spannelements sowie der Ableitung dieser Spannkraft zu den Führungsachsen ergibt. Die sich hierdurch ergebenden Vorteile sind vorstehend bereits im Zusammenhang mit dem Kettenaggregat erläutert worden. Insbesondere wird die Möglichkeit geschaffen, die Kettenspannung der Kette des Kettenaggregats indirekt fortwährend zu überwachen und auf diese Weise einen unbeabsichtigten Abfall der Kettenspannung und sich in Konsequenz daraus ergebende Schäden an bearbeiteten Werkstücken zu vermeiden.

In einer besonders vorteilhaften Ausgestaltung des Verfahrens werden die mittels der Dehnungsmesseinrichtung erfassten Informationen mittels einer Auswerteinrichtung verarbeitet. Dies ermöglicht es, dass bei Feststellung einer Unterschreitung eines voreingestellten Mindestwerts für die Spannkraft des Spannelements (und mithin für die Kettenspannung der Kette) automatisch eine Information abgesetzt wird. Auf Basis dieser Information kann ein jeweiliger Maschinenführer Maßnahmen ergreifen, die zu einer Anhebung der Kettenspannung auf einen gewünschten Wert führen. Insbesondere hat der Maschinenführer die Möglichkeit, mittels des Stellelements die Spannkraft des Spannelements zu verändern und auf diese Weise indirekt auf die Kettenspannung der Kette Einfluss zu nehmen.

In besonders bevorzugter Ausgestaltung kann dieser Prozess auch automatisiert erfolgen, wobei die Auswerteinrichtung mit einem Aktor zusammenwirkt, der seinerseits wiederum mit dem Stellelement zusammenwirkt. Die Auswerteinrichtung ist hierbei gemäß vorstehender Erläuterung dazu vorgesehen und eingerichtet, den Aktor anzusteuern, insbesondere wenn der Mindestwert für die Spannkraft des Spannelements unterschritten wird. In diesem Fall kann der Aktor das Stellelement derart verstellen, dass die Spannkraft des Spannelements erhöht wird. Dies führt wiederum zu einer Erhöhung der Kettenspannung der Kette des Kettenaggregats.

### Ausführungsbeispiele

Die Erfindung ist nachstehend anhand eines Ausführungsbeispiels, das in den Figuren dargestellt ist, näher erläutert. Es zeigt:
- Fig. 1:: Eine isometrische Ansicht eines Doppelendprofilers,
- Fig. 2:: Eine isometrische Ansicht eines erfindungsgemäßen Kettenaggregats,
- Fig. 3:: Ein Detail eines Spannsystem des Kettenaggregats gemäß Figur 2,

- Fig. 4:: Eine schematische Darstellung einer Übertragungseinrichtung des Spannsystems gemäß Figur 3.

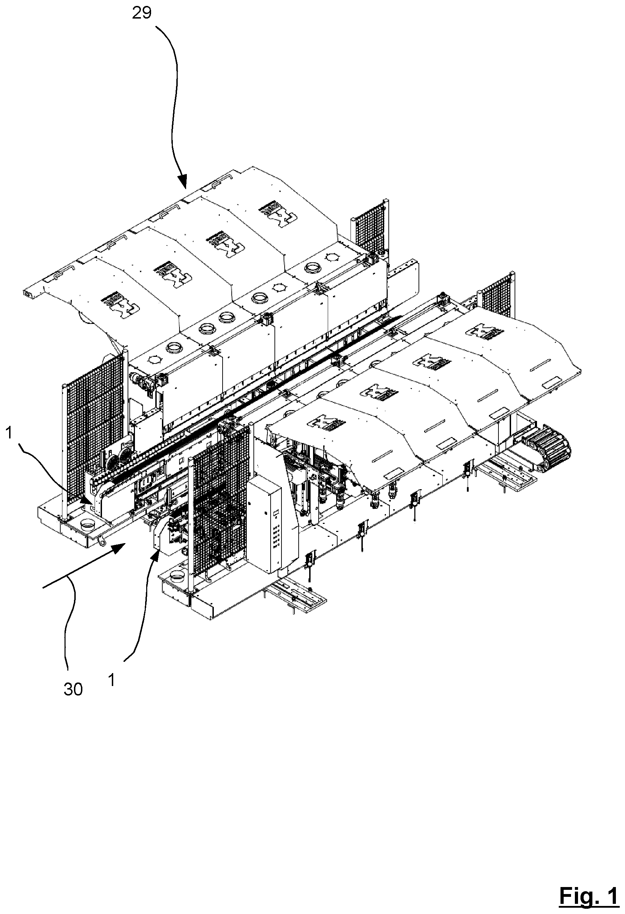

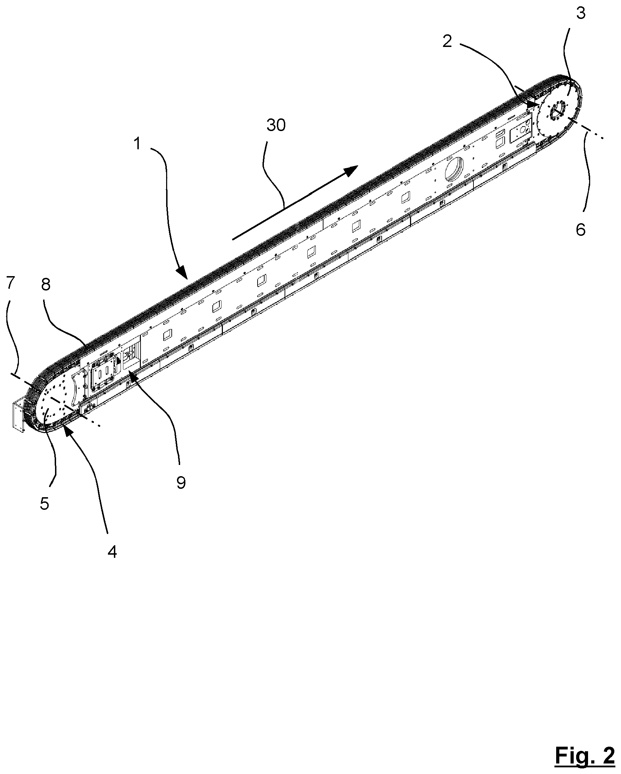

Ein Ausführungsbeispiel, das in den **Figuren 1 bis 4** dargestellt ist, betrifft ein erfindungsgemäßes Kettenaggregat **1,** das sich besonders gut anhand von **Figur 2** ergibt. Ein solches Kettenaggregat **1** kann insbesondere in einem Doppelendprofiler **29** zur Anwendung kommen, wie er beispielhaft in **Figur 1** dargestellt ist. Dort wirken insgesamt zwei Kettenaggregate **1** zusammen, die parallel zueinander orientiert und paarweise angeordnet sind. Hierdurch sind die Kettenaggregate **1** gemeinsam dazu geeignet, in den Figuren nicht dargestellte Werkstücke entlang einer Förderrichtung **30** zu fördern, sodass diese mittels nicht einzeln dargestellten Bearbeitungseinrichtungen des Doppelendprofilers **29** bearbeitet werden können. Die Besonderheit des Doppelendprofilers **29** besteht darin, dass ein jeweiliges Werkstück an zwei einander gegenüberliegenden Seiten gleichzeitig mittels Bearbeitungseinrichtungen bearbeitet werden kann.

Das Kettenaggregat **1** verfügt in dem gezeigten Beispiel an einem Antriebskopf **2** über ein Kettenrad **3** sowie gegenüberliegend an einem Umlenkkopf **4** über eine Umlenkeinheit **5,** die hier von einer Umlenkscheibe gebildet ist. Das Kettenrad **3** ist mittels eines nicht dargestellten Drehantriebs, der von einem Elektromotor gebildet sein kann, um eine horizontale Drehachse **6** drehantreibbar ausgebildet. Die Umlenkeinheit **5** ist hingegen passiv ausgebildet, wobei eine nachstehend beschriebene Kette **8** an der Umlenkeinheit **5** um eine horizontale Umlenkachse **7** abrollend auf einem Kreisbogen umlenkbar ist. Die Drehachse **6** und die Umlenkachse **7** erstrecken sich in einer gemeinsamen horizontalen Ebene.

Die Umlenkeinheit **5** und das Kettenrad **3** sind gemeinsam mittels einer Kette **8** umspannt, die endlos ausgebildet ist. Infolge eines Antriebs des Kettenrades **3** wird die Kette **8** umlaufend angetrieben, sodass Werkstücke, die auf einer Oberseite der Kette **8** positioniert werden, entlang der Förderrichtung **30** gefördert werden können. Hierbei ist in dem gezeigten Beispiel die Kette **8** mit seitlich vorstehenden Formschlussmitteln ausgestattet, die an dem Kettenrad **3** unter Ausbildung eines Formschlusses gegriffen werden. Hierdurch ist ein Drehmoment, das auf das Kettenrad **3** einwirkt, auf die Kette **8** übertragbar, sodass die Kette **8** in der beschriebenen Weise bestimmungsgemäß antreibbar ist. Im Übrigen kann die Kette **8** an ihrer Unterseite Führungselemente aufweisen, mittels derer eine seitliche Führung der Kette vorgenommen werden kann. Diese Führungselemente können insbesondere in Form von Führungsrollen ausgebildet sein, mittels derer die Kette **8** auf einer Führungsfläche eines Grundkörpers des Kettenaggregats **1** abrollt.

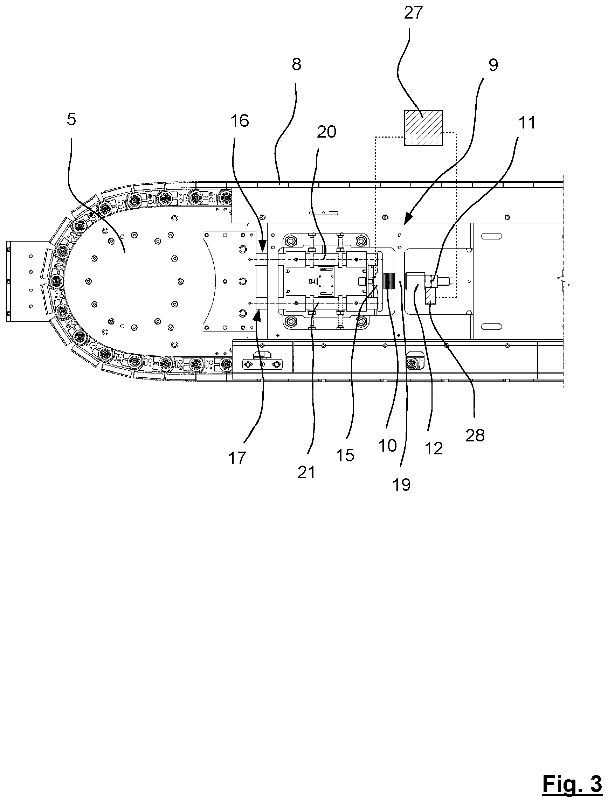

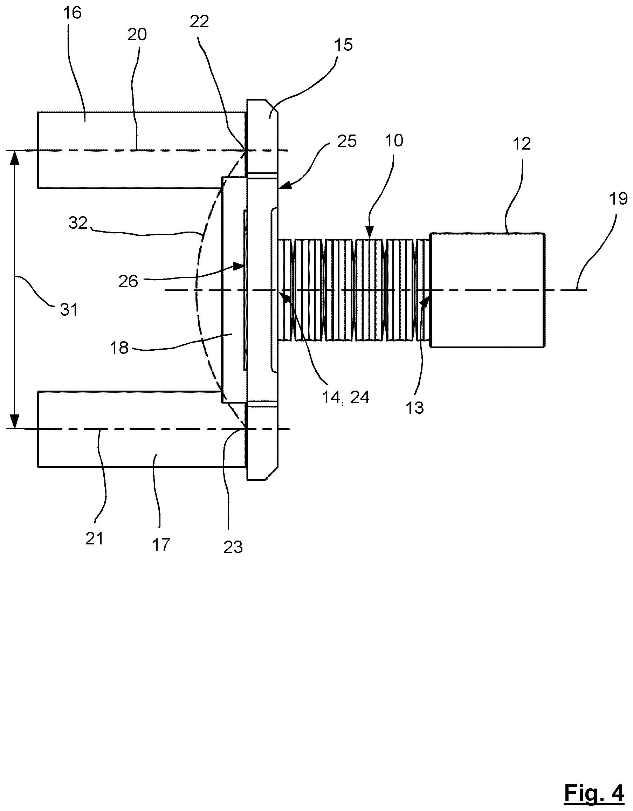

Das Kettenaggregat **1** umfasst des Weiteren ein Spannsystem **9,** das sich besonders gut anhand von **Figur 3** ergibt. Das Spannsystem **9** dient dazu, eine Kettenspannung der Kette **8** zu bewirken und aufrechtzuerhalten. Zu diesem Zweck umfasst das Spannsystem **9** ein Spannelement **10,** das in dem gezeigten Beispiel von mit einer Druckkraft vorgespannten Federelement gebildet ist. Das Federelement ist hier von einem Tellerfederpaket gebildet. An einem ersten Ende **13** des Spannelements **10** stützt sich selbiges gegen ein Widerlager **12** ab. An seinem gegenüberliegenden zweiten Ende **14** stützt sich das Spannelement **10** an einer Übertragungseinrichtung **15** ab, die im Weiteren Detail nachstehend in Verbindung mit **Figur 4** erläutert wird.

Das Spannelement **10** ist in dem gezeigten Beispiel entlang eines Gewindebolzens geführt, der jenseits des ersten Endes **13** des Spannelements **10** mit einem Stellelement **11** zusammenwirkt. Letzteres ist in dem gezeigten Beispiel von einer Mutter gebildet, deren Innengewinde mit einem Außengewinde des Gewindebolzens kämmt. Zudem wirkt das Stellelement **11** mit dem Widerlager **12** zusammen, und zwar derart, dass das Widerlager **12** entlang einer Längsachse des Gewindebolzens infolge einer Verstellung des Stellelements **11** bewegbar ist. Auf diese Weise kann mittels des Stellelements **11** eine Veränderung einer effektiven Länge des Spannelements **10** herbeigeführt werden, wobei sich die effektive Länge als der parallel zu dem Gewindebolzen gemessene Abstand zwischen dem ersten Ende **13** und dem zweiten Ende **14** des Spannelements **10** versteht. Da das Spannelement **10** eine Federkonstante aufweist, geht eine Veränderung der effektiven Länge des Spannelements **10** proportional mit einer Veränderung einer Spannkraft einher, die mittels des Spannelements **10** zur einen Seite auf das Widerlager **12** und zur anderen Seite auf die Übertragungseinrichtung **15** wirkt. Entsprechend ist es mittels des Stellelements **11** möglich, die Spannkraft des Spannelements **10** einzustellen bzw. zu verändern.

Gemäß vorstehender Erläuterung stützt sich das Spannelement **10** an seinem zweiten Ende **14** an der Übertragungseinrichtung **15** ab. Dies geschieht an einer Abstützstelle **24,** die sich in dem gezeigten Beispiel in etwa mittig an der Übertragungseinrichtung **15** befindet. Die Übertragungseinrichtung **15** dient dazu, die an der Abstützstelle **24** eingeleitete Spannkraft an zwei Führungsachsen **16, 17** zu übertragen, die einander gegenüberliegend endseitig an die Übertragungseinrichtung **15** angeschlossen sind. Mit anderen Worten sind Anschlussstellen **22, 23** der Führungsachsen **16, 17** an einander gegenüberliegenden Enden der Übertragungseinrichtung **15** angeordnet, wobei die Anschlussstellen **22, 23** an einer zu der Abstützstelle **24** gegenüberliegenden Seite an der Übertragungseinrichtung **15** ausgebildet sind. Längsachsen **20, 21** der Führungsachsen **16, 17** sind in dem gezeigten Beispiel parallel zu einer Wirkungsachse **19** der Spannkraft des Spannelements **10** orientiert. Die Führungsachsen **16, 17** sind hier von langgestreckten Stäben gebildet. Sie bilden Auflager für die Übertragungseinrichtung, sodass die Spannkraft des Spannelements **10** zu den Führungsachsen **16, 17** ableitbar ist.

Die Ableitung der Spannkraft des Spannelements **10** zu den Führungsachsen **16, 17** erfolgt in dem gezeigten Beispiel entsprechend nach Art eines Balkens auf zwei Stützen, wobei die Führungsachsen **16, 17** die Auflager für die Spannkraft des Spannelements **10** bilden. Dabei ist die Abstützstelle **24** für das Spannelement **10** in dem gezeigten Beispiel mittig zwischen den Anschlussstellen **22, 23** der Führungsachsen **16, 17** angeordnet, sodass die Spannkraft in Feldmitte der Übertragungseinrichtung **15** wirkt. Die Spannkraft, die infolge der Vorspannung des Spannelements **10** mit einer Druckkraft auf die Oberfläche der Übertragungseinrichtung **15** drückt, an der sich die Abstützstelle **24** befindet ("Vorderseite" der Übertragungseinrichtung **15),** führt zu einer Verformung der Übertragungseinrichtung **15** in Form einer Durchbiegung derselben zwischen den Führungsachsen **16, 17** bzw. den zugehörigen Anschlussstellen **22, 23.** Dies ist in **Figur 4** mittels einer qualitativen Biegelinie **32** veranschaulicht.

Die Führungsachsen **16, 17** wirken in dem gezeigten Beispiel mittelbar mit der Umlenkeinheit **5** zusammen, sodass die mittels des Spannelements **10** ausgeübte Spannkraft über die Führungsachsen **16, 17** letztlich in die Umlenkeinheit **5** eingeleitet wird. Hierdurch wird die Umlenkeinheit **5** in horizontale Richtung gegen die Kette **8** gedrückt, wodurch die Kette **8** gespannt wird. Die translatorische Bewegung der Umlenkeinheit **5** relativ zu dem Kettenrad **3** findet dabei derart statt, dass sich der horizontal gemessene Abstand zwischen der Umlenkeinheit **5** und dem Kettenrand **3** verändert, beispielsweise vergrößert (bei Erhöhung der Kettenspannung). Die Kette **8** übt entsprechend eine Gegenkraft aus, die eine weitere Bewegung der Umlenkeinheit **5** "nach außen" (in von dem Kettenrad **3** abgewandte Richtung) verhindert. Entsprechend ist eine Bewegung der Führungsachsen **16, 17** entlang ihrer jeweiligen Längsachsen **20, 21** nur soweit möglich, bis ein Gleichgewicht zwischen der Spannkraft des Spannelements 10 und der infolge der Kettenspannung der Kette **8** bewirkt Gegenkraft vorliegt. Diese Behinderung einer weiteren Bewegung der Führungsachsen **16, 17** führt dazu, dass diese Gegenkräfte gegenüber dem Spannelement **10** an der Übertragungseinrichtung **15** wirken und dementsprechend der Übertragungseinrichtung **15** im statischen Sinne als Auflager für die Spannkraft des Spannelements **10** dienen. Aus diesem Grund bildet sich in der Übertragungseinrichtung **15** die beschriebene Biegelinie **32** aus, die sich infolge der Ausbildung eines Biegemoments in der Übertragungseinrichtung **15** einstellt. Dieses Biegemoment ergibt sich betragsmäßig zu einem Viertel der Spannkraft multipliziert mit einer effektiven Länge **31** der Übertragungseinrichtung **15** zwischen den Längsachsen **20, 21** der Führungsachsen **16, 17.**

Die Umlenkeinheit **5** ist mittels einer linear beweglichen Lagereinrichtung gelagert, die in eine Richtung parallel zu den Längsachsen **20, 21** beweglich ausgebildet ist. Auf diese Weise kann die Umlenkeinheit **5** in der beschriebenen Weise unter Wirkung der Spannkraft des Spannelements **10** linear bewegt werden und hierdurch die Kettenspannung der Kette **8** beeinflusst werden.

Nach alldem ist die Spannkraft des Spannelements **10** proportional zu der Kettenspannung der Kette **8.** In dem gezeigten Beispiel ist die Übertragungseinrichtung **15** an ihrer Unterseite, die der Vorderseite der Übertragungseinrichtung **15** gegenüberliegt, mit einer Dehnungsmesseinrichtung **18** ausgestattet, die dazu vorgesehen und eingerichtet ist, Verformungen der Übertragungseinrichtung **15** messtechnisch zu erfassen. Insbesondere kann die Dehnungsmesseinrichtung **18** von einem oder mehreren Dehnungsmessstreifen gebildet sein, wobei insbesondere eine Ausrichtung parallel zu einer Verbindungslinie zwischen den Anschlussstellen **22, 23** der Führungsachsen **16, 17** für eine Messung von Interesse ist. Die Dehnungsmesseinrichtung **18** ist in dem gezeigten Beispiel direkt entlang der Wirkungsachse **19** der Spannkraft des Spannelement **10** gegenüberliegend von der Abstützstelle **24** an der Übertragungseinrichtung **15** angeordnet ("Rückseite" der Übertragungseinrichtung **15).**

Mittels der Dehnungsmesseinrichtung **18** ist es nunmehr möglich, eine Veränderung der Kettenspannung **8,** die sich gemäß vorstehender Erläuterung in einer Veränderung der Spannkraft des Spannelements **10** niederschlägt, zu registrieren, da diese Veränderung ebenfalls mit einer Veränderung des Verformungszustands der Übertragungseinrichtung **15** einhergeht. Folglich ist es mittels der Dehnungsmesseinrichtung **18** möglich, die Kettenspannung der Kette **8** fortwährend zu überwachen, wobei diese Überwachung jedoch nicht unmittelbar an der Kette **8,** sondern mittelbar mittels der Überwachung eines Verformungszustands der Übertragungseinrichtung **15** stattfindet.

Die Dehnungsmesseinrichtung **18** wirkt in dem gezeigten Beispiel mit einer Auswerteinrichtung **27** zusammen, die in Daten übertragender Weise mit der Dehnungsmesseinrichtung **18** verbunden ist. Die Auswerteinrichtung **27** ist dazu geeignet, die mittels der Dehnungsmesseinrichtung **18** erfassten Informationen zu verarbeiten. Auf diese Weise kann die Auswerteinrichtung **27** insbesondere dazu eingerichtet sein, bei Feststellung einer Unterschreitung eines Mindestwerts für die Durchbiegung der Übertragungseinrichtung **15** bzw. analog bei einer Unterschreitung eines Mindestwerts der Kettenspannung der Kette **8** eine Information an einen Maschinenführer des Doppelendprofilers **29** abzusetzen.

In weitergehender Ausgestaltung wirkt die Auswerteinrichtung **27** in dem gezeigten Beispiel mit einem Aktor **28** zusammen, sodass die Auswerteinrichtung **27** den Aktor **28** ansteuern kann. Der Aktor **28** wirkt unmittelbar auf das Stellelement **11** ein, sodass mittels eines Betriebs des Aktors **28** das Stellelement **11** verstellt und dadurch gemäß vorstehender Erläuterung die Spannkraft des Spannelements **10** verändert werden kann. Auf diese Weise ist es möglich, die Kettenspannung der Kette **8** automatisch nachzuführen, beispielsweise mittels eines fortwährenden Abgleichs eines Ist-Werts der Kettenspannung mit einem SollWert. Diese Werte korrespondieren unmittelbar mit einer Ist-Verformung bzw. einer Soll-Verformung der Übertragungseinrichtung **15,** die unmittelbar mittels der Dehnungsmesseinrichtung **18** messtechnisch erfasst wird.

### Bezugszeichenliste

- 1: Kettenaggregat
- 2: Antriebskopf
- 3: Kettenrad
- 4: Umlenkkopf
- 5: Umlenkeinheit
- 6: Drehachse
- 7: Umlenkachse
- 8: Kette
- 9: Spannsystem
- 10: Spannelement
- 11: Stellelement
- 12: Widerlager
- 13: erstes Ende
- 14: zweites Ende
- 15: Übertragungseinrichtung
- 16: Führungsachse
- 17: Führungsachse
- 18: Dehnungsmesseinrichtung
- 19: Wirkungsachse
- 20: Längsachse
- 21: Längsachse
- 22: Anschlussstelle
- 23: Anschlussstelle
- 24: Abstützstelle
- 25: Vorderseite
- 26: Rückseite
- 27: Auswerteinrichtung
- 28: Aktor
- 29: Doppelendprofiler
- 30: Förderrichtung
- 31: Länge
- 32: Biegelinie

## Patentansprüche

1. Kettenaggregat (1) zum Vortrieb von Werkstücken entlang einer Bearbeitungsstrecke, umfassend
- einen Antriebskopf (2) mit einem um eine Drehachse (6) drehantreibbaren Kettenrad (3),
- einen Umlenkkopf (4) mit einer Umlenkeinheit (5),
- eine in sich geschlossene, das Kettenrad (3) und die Umlenkeinheit (5) umspannende Kette (8),
- ein Spannsystem (9) zur Spannung der Kette (8),
wobei das Kettenrad (3) mittels eines Drehantriebs drehantreibbar ist, sodass die Kette (8) um das Kettenrad (3) und die Umlenkeinheit (5) umläuft,
das Spannsystem (9) umfassend
- mindestens ein Spannelement (10),
- mindestens ein Stellelement (11) zur Einstellung einer Spannkraft des Spannelements (10),
- ein Widerlager (12), gegen das sich das Spannelement (10) an seinem ersten Ende (13) abstützt,
- eine Übertragungseinrichtung (15), gegen die sich das Spannelement (10) an seinem zweiten Ende (14) abstützt,
- mindestens zwei an die Übertragungseinrichtung (15) angeschlossene, sich parallel zueinander erstreckende Führungsachsen (16, 17),
wobei die infolge der Abstützung des zweiten Endes (14) des Spannelements (10) in die Übertragungseinrichtung (15) eingeleitete Spannkraft mittels der Übertragungseinrichtung (15) auf die beiden Führungsachsen (16, 17) ableitbar ist,
wobei das Kettenrad (3) oder die Umlenkeinheit (5) mittelbar oder unmittelbar mittels der Führungsachsen (16, 17) gelagert ist, sodass das Kettenrad (3) oder die Umlenkeinheit (5) mittels der Spannkraft des Spannelements (10) gegen die Kette (8) drückbar und hierdurch die Kette (8) mit einer Kettenspannung spannbar ist,
**gekennzeichnet durch**
eine Dehnungsmesseinrichtung (18), die derart an der Übertragungseinrichtung (15) angeordnet ist, dass sie dazu eingerichtet ist, Informationen betreffend eine Verformung der Übertragungseinrichtung (15), die infolge der Einwirkung der Spannkraft und deren Ableitung hin zu den Führungsachsen (16, 17) auftritt, zu erfassen.

2. Kettenaggregat (1) nach Anspruch 1, **dadurch gekennzeichnet, dass** eine Wirkungsachse (19) der Spannkraft und Längsachsen (20, 21) der Führungsachsen (16, 17) parallel zueinander orientiert sind.

3. Kettenaggregat (1) nach einem der vorhergehenden Ansprüche, **dadurch gekennzeichnet, dass** Anschlussstellen (22, 23), an denen die Führungsachsen (16, 17) an die Übertragungseinrichtung (15) angeschlossen sind, sich an einer Rückseite (26) der Übertragungseinrichtung (15) befinden, die bezogen auf eine Wirkungsachse (19) der Spannkraft einer Vorderseite (25) der Übertragungseinrichtung (15) gegenüberliegt, an der sich eine Abstützstelle (24) befindet, an der sich das Spannelement (10) mit seinem zweiten Ende (14) an der Übertragungseinrichtung (15) abstützt.

4. Kettenaggregat (1) nach einem der vorhergehenden Ansprüche, **dadurch gekennzeichnet, dass** die Übertragungseinrichtung (15) statisch nach Art eines Balkens auf zwei Stützen ausgebildet ist, wobei die Führungsachsen (16, 17) Auflager der Übertragungseinrichtung (15) bilden, wobei vorzugsweise die Auflager vor endseitig gegenüberliegend an der Übertragungseinrichtung (15) angeordnet sind.

5. Kettenaggregat (1) nach Anspruch 4, **dadurch gekennzeichnet, dass** eine Abstützstelle (24), an der sich das Spannelement (10) mit seinem zweiten Ende (14) an der Übertragungseinrichtung (15) abstützt, zumindest im Wesentlichen in Feldmitte zwischen Anschlussstellen (22, 23) angeordnet ist, an denen die Führungsachsen (16, 17) an die Übertragungseinrichtung (15) angeschlossen sind.

6. Kettenaggregat (1) nach einem der vorhergehenden Ansprüche, **dadurch gekennzeichnet, dass** die Dehnungsmesseinrichtung (18) auf einer Rückseite (26) der Übertragungseinrichtung (15) angeordnet ist, die einer Vorderseite (25) der Übertragungseinrichtung (15) gegenüberliegt, wobei sich eine Abstützstelle (24), an der sich Spannelement (10) mit seinem zweiten Ende (14) an der Übertragungseinrichtung (15) abstützt, an der Vorderseite (25) der Übertragungseinrichtung (15) befindet.

7. Kettenaggregat (1) nach den Ansprüchen 4 bis 6, **dadurch gekennzeichnet, dass** die Dehnungsmesseinrichtung (18) entlang einer Wirkungsachse (19) der Spannkraft gegenüberliegend zu der Abstützstelle (24) des zweiten Endes (14) des Spannelements (10) zumindest im Wesentlichen in Feldmitte der Übertragungseinrichtung (15) an der Rückseite (26) der Übertragungseinrichtung (15) angeordnet ist.

8. Kettenaggregat (1) nach einem der vorhergehenden Ansprüche, **gekennzeichnet durch** eine Auswerteinrichtung (27), die in Daten übertragender Weise mit der Dehnungsmesseinrichtung (18) wirkverbunden ist, wobei die Auswerteinrichtung (27) dazu vorgesehen und eingerichtet ist, mittels der Dehnungsmesseinrichtung (18) erfasste Informationen betreffend die Verformung der Übertragungseinrichtung (15) zu verarbeiten.

9. Kettenaggregat (1) nach Anspruch 8, **dadurch gekennzeichnet, dass** die Auswerteinrichtung (27) dazu vorgesehen und eingerichtet ist, fortwährend eine Ist-Verformung der Übertragungseinrichtung (15) auszuwerten und aus der Ist-Verformung auf eine wirkende Spannkraft des Spannelements (10) zu schließen.

10. Kettenaggregat (1) nach Anspruch 9, **dadurch gekennzeichnet, dass** die Auswerteinrichtung (27) dazu vorgesehen und eingerichtet ist, für den Fall, dass die Spannkraft einen vorgegebenen Mindestwert unterschreitet, automatisch eine Information abzusetzen.

11. Kettenaggregat (1) nach einem der vorhergehenden Ansprüche, **gekennzeichnet durch** einen mit dem Stellelement (11) zusammenwirkenden Aktor (28), der dazu vorgesehen und eingerichtet ist, auf das Stellelement (11) einzuwirken und hierdurch die Spannkraft des Spannelements (10) zu verändern.

12. Kettenaggregat (1) nach den Ansprüchen 10 und 11, **dadurch gekennzeichnet, dass** der Aktor (28) in Daten übertragender Weise mit der Auswerteinrichtung (27) verbunden ist, wobei die Auswerteinrichtung (27) dazu vorgesehen und eingerichtet ist, für den Fall, dass die Spannkraft den vorgegebenen Mindestwert unterschreitet, den Aktor (28) derart anzusteuern, dass das Stellelement (11) verstellt und hierdurch die Spannkraft des Spannelements (10) erhöht wird.

13. Verfahren zum Betrieb eines Kettenaggregats (1), das Kettenaggregat (1) umfassend
- einen Antriebskopf (2) mit einem um eine Drehachse (6) drehantreibbaren Kettenrad (3),
- einen Umlenkkopf (4) mit einer Umlenkeinheit (5),
- eine in sich geschlossene, das Kettenrad (3) und die Umlenkeinheit (5) umspannende Kette (8),
- ein Spannsystem (9) zur Spannung der Kette (8),
wobei das Kettenrad (3) mittels eines Drehantriebs drehangetrieben wird, sodass die Kette (8) um das Kettenrad (3) und die Umlenkeinheit (5) umläuft,
das Spannsystem (9) umfassend
- mindestens ein Spannelement (10),
- mindestens ein Stellelement (11) zur Einstellung einer Spannkraft des Spannelements (10),
- ein Widerlager (12), gegen das sich das Spannelement (11) an seinem ersten Ende (13) abstützt,
- eine Übertragungseinrichtung (15), gegen die sich das Spannelement (10) an seinem zweiten Ende (14) abstützt,
- mindestens zwei an die Übertragungseinrichtung (15) angeschlossene, sich parallel zueinander erstreckende Führungsachsen (16, 17),
wobei die infolge der Abstützung des zweiten Endes (14) des Spannelements (10) in die Übertragungseinrichtung (15) eingeleitete Spannkraft mittels der Übertragungseinrichtung (15) auf die beiden Führungsachsen (16, 17) abgeleitet wird,
wobei das Kettenrad (3) oder die Umlenkeinheit (5) mittelbar oder unmittelbar mittels der Führungsachsen (16, 17) gelagert ist, sodass das Kettenrad (3) oder die Umlenkeinheit (5) mittels der Spannkraft des Spannelements (10) gegen die Kette (8) gedrückt und hierdurch die Kette (8) mit einer Kettenspannung gespannt wird, **gekennzeichnet durch** eine Dehnungsmesseinrichtung (18),
die derart an der Übertragungseinrichtung (15) angeordnet ist, dass sie dazu eingerichtet ist, Informationen betreffend eine Verformung der Übertragungseinrichtung (15), die infolge der Einwirkung der Spannkraft und deren Ableitung zu den Führungsachsen (16, 17) auftritt, zu erfassen,
wobei mittels der Dehnungsmesseinrichtung (18) fortwährend Informationen betreffend eine Verformung der Übertragungseinrichtung (15), die infolge der Einwirkung der Spannkraft und der Ableitung der Spannkraft zu den Führungsachsen (16, 17) auftritt, erfasst werden.

14. Verfahren nach Anspruch 13, **dadurch gekennzeichnet, dass** die erfassten Informationen mittels einer Auswerteinrichtung (27) verarbeitet werden, wobei vorzugsweise bei Feststellung einer Unterschreitung eines voreingestellten Mindestwerts für die Spannkraft des Spannelements (10) automatisch eine Information abgesetzt wird.

15. Verfahren nach Anspruch 14, **dadurch gekennzeichnet, dass** mittels der Auswerteinrichtung (27) ein Aktor (28), der mit dem Stellelement (11) zusammenwirkt, angesteuert wird, wenn der Mindestwert für die Spannkraft unterschritten wird, wobei mittels des Aktors (28) das Stellelement (11) derart verstellt wird, dass die Spannkraft des Spannelements (10) erhöht wird.

## Claims

1. A chain unit (1) for advancing workpieces along a machining path, comprising
- a drive head (2) with a chain wheel (3) which can be driven in rotation about an axis of rotation (6),
- a deflection head (4) with a deflection unit (5),
- a self-contained chain (8) spanning around the chain wheel (3) and the deflection unit (5),
- a tensioning system (9) for tensioning the chain (8),
wherein the chain wheel (3) can be driven in rotation by means of a rotary drive, so that the chain (8) revolves around the chain wheel (3) and the deflection unit (5),
the tensioning system (9) comprising
- at least one tensioning element (10),
- at least one actuating element (11) for adjusting a tensioning force of the tensioning element (10),
- an abutment (12) against which the tensioning element (10) is supported at its first end (13),
- a transmission device (15), against which the tensioning element (10) rests at its second end (14),
- at least two guide axes (16, 17) connected to the transmission device (15) and extending parallel to one another,
wherein the tensioning force introduced into the transmission device (15) as a result of the support of the second end (14) of the tensioning element (10) can be derived by means of the transmission device (15) on the two guide axes (16, 17),
wherein the chain wheel (3) or the deflection unit (5) is mounted indirectly or directly by means of the guide axes (16, 17), so that the chain wheel (3) or the deflection unit (5) can be pressed against the chain (8) by means of the tensioning force of the tensioning element (10) and thereby the chain (8) can be tensioned with a chain tension,
**characterised by**
a strain measuring device (18), which is arranged on the transmission device (15) in such a way that it is configured to detect information relating to a deformation of the transmission device (15) which occurs as a result of the effect of the tensioning force and the derivation thereof towards the guide axes (16, 17).

2. The chain unit (1) according to claim 1, **characterised in that** an axis of action (19) of the tensioning force and longitudinal axes (20, 21) of the guide axes (16, 17) are oriented parallel to one another.

3. The chain unit (1) according to any one of the preceding claims, **characterised in that** connection points (22, 23), at which the guide axes (16, 17) are connected to the transmission device (15), are located on a rear side (26) of the transmission device (15), which lies opposite a front side (25) of the transmission device (15) with respect to an axis of action (19) of the tensioning force, on which a support point (24) is located, on which the tensioning element (10) is supported with its second end (14) on the transmission device (15).

4. The chain unit (1) according to any one of the preceding claims, **characterised in that** the transmission device (15) is formed statically in the manner of a bar on two supports, wherein the guide axes (16, 17) form supports of the transmission device (15), wherein the supports are preferably arranged on the transmission device (15) at the end sides opposite one another.

5. The chain unit (1) according to claim 4, **characterised in that** a support point (24), on which the tensioning element (10) is supported with its second end (14) on the transmission device (15), is arranged at least substantially in the middle of the field between connection points (22, 23), to which the guide axes (16, 17) are connected to the transmission device (15).

6. The chain unit (1) according to any one of the preceding claims, **characterised in that** the strain measuring device (18) is arranged on a rear side (26) of the transmission device (15), which lies opposite a front side (25) of the transmission device (15), wherein a support point (24), on which the tensioning element (10) is supported with its second end (14) on the transmission device (15), is located on the front side (25) of the transmission device (15).

7. The chain unit (1) according to claims 4 to 6, **characterised in that** the strain measuring device (18) is arranged along an axis of action (19) of the tensioning force opposite the support point (24) of the second end (14) of the tensioning element (10) at least substantially in the middle of the field of the transmission device (15) on the rear side (26) of the transmission device (15).

8. The chain unit (1) according to any one of the preceding claims, **characterised by** an evaluation device (27) which is operatively connected to the strain measuring device (18) in a data-transmitting manner, wherein the evaluation device (27) is provided and configured to process information relating to the deformation of the transmission device (15) detected by means of the strain measuring device (18).

9. The chain unit (1) according to claim 8, **characterised in that** the evaluation device (27) is provided and configured to evaluate continuously an actual deformation of the transmission device (15) and to deduce an acting tensioning force of the tensioning element (10) from the actual deformation.

10. The chain unit (1) according to claim 9, **characterised in that** the evaluation device (27) is provided and configured to automatically record information in the event that the tensioning force falls below a preset minimum value.

11. The chain unit (1) according to any one of the preceding claims, **characterised by** an actuator (28) interacting with the actuating element (11), which is provided and designed to act on the actuating element (11) and thereby to change the tensioning force of the tensioning element (10).

12. The chain unit (1) according to claims 10 and 11, **characterised in that** the actuator (28) is connected to the evaluation device (27) in a data-transmitting manner, wherein the evaluation device (27) is provided and configured, in the event that the tensioning force falls below the preset minimum value, to control (28) the actuator (28) in such a way that the actuating element (11) is adjusted and thereby the tensioning force of the tensioning element (10) is increased.

13. A method for operating a chain unit (1), the chain unit (1) comprising
- a drive head (2) with a chain wheel (3) which can be driven in rotation about an axis of rotation (6),
- a deflection head (4) with a deflection unit (5),
- a self-contained chain (8) spanning around the chain wheel (3) and the deflection unit (5),
- a tensioning system (9) for tensioning the chain (8),
wherein the chain wheel (3) is driven in rotation by means of a rotary drive, so that the chain (8) revolves around the chain wheel (3) and the deflection unit (5), the tensioning system (9) comprising
- at least one tensioning element (10),
- at least one actuating element (11) for adjusting a tensioning force of the tensioning element (10),
- an abutment (12), against which the tensioning element (11) is supported at its first end (13),
- a transmission device (15), against which the tensioning element (10) is supported at its second end (14),
- at least two guide axes (16, 17) connected to the transmission device (15) and extending parallel to one another,
wherein the tensioning force introduced into the transmission device (15) as a result of the support of the second end (14) of the tensioning element (10) is diverted to the two guide axes (16, 17) by means of the transmission device (15),
wherein the chain wheel (3) or the deflection unit (5) is mounted indirectly or directly by means of the guide axes (16, 17), so that the chain wheel (3) or the deflection unit (5) is pressed against the chain (8) by means of the tensioning force of the tensioning element (10) and thereby the chain (8) is tensioned with a chain tension,
**characterised in that** the strain measuring device (18) is arranged on the transmission device (15) in such a way that it is configured to detect information relating to a deformation of the transmission device (15), which occurs as a result of the action of the tensioning force and the derivation thereof with respect to the guide axes (16, 17),
wherein, by means of the strain measuring device (18), information is continuously detected relating to a deformation of the transmission device (15), which occurs as a result of the action of the tensioning force and the derivation of the tensioning force with respect to the guide axes (16, 17).

14. The method according to claim 13, **characterised in that** the acquired information is processed by means of an evaluation device (27), wherein information is preferably recorded automatically when it is ascertained that a preset minimum value for the tensioning force of the tensioning element (10) is fallen below.

15. The method according to claim 14, **characterised in that** an actuator (28), which interacts with the actuating element (11), is actuated by means of the evaluation device (27) if the minimum value for the tensioning force is fallen below, wherein the actuating element (11) is adjusted by means of the actuator (28) in such a way that the tensioning force of the tensioning element (10) is increased.

## Revendications

1. Ensemble à chaîne (1) destiné à faire avancer des pièces le long d'une ligne de traitement, comprenant
- une tête d'entraînement (2) avec une roue à chaîne (3) pouvant être entraînée en rotation autour d'un axe de rotation (6),
- une tête de renvoi (4) avec une unité de renvoi (5),
- une chaîne (8) fermée sur elle-même , rétreignant la roue à chaîne (3) et l'unité de renvoi (5),
- un système de tension (9) pour la tension de la chaîne (8),
sachant que la roue à chaîne (3) peut être entraînée en rotation au moyen d'un entraînement rotatif de telle manière que la chaîne (8) passe autour de la roue à chaîne (3) et de l'unité de renvoi (5),
le système de tension (9) comprenant
- au moins un élément de tension (10),
- au moins un élément de commande (11) pour régler une force de tension de l'élément de tension (10),
- une butée (12) contre laquelle l'élément de tension (10) s'appuie à sa première extrémité (13),
- un système de transmission (15) contre lequel l'élément de tension (10) s'appuie à sa deuxième extrémité (14),
- au moins deux axes de guidage (16, 17) raccordés au système de transmission (15), s'étendant parallèlement l'un à l'autre,
sachant que la force de tension initiée dans le système de transmission (15) en raison de l'appui de la deuxième extrémité (14) de l'élément de tension (10) peut être déviée au moyen du système de transmission (15) sur les deux axes de guidage (16, 17),
sachant que la roue à chaîne (3) ou l'unité de renvoi (5) est logée indirectement ou directement au moyen des axes de guidage (16, 17) de telle manière que la roue à chaîne (3) ou l'unité de renvoi (5) peut être poussée au moyen de la force de tension de l'élément de tension (10) contre la chaîne (8) et la chaîne (8) peut être tendue de ce fait à une tension de chaîne,
**caractérisé par**
un système de mesure d'extension (18), qui est disposé sur le système de transmission (15) de telle manière qu'il est agencé pour saisir des informations concernant une déformation du système de transmission (15), qui survient en raison de l'effet de la force de tension et de la déviation de celle-ci vers les axes de guidage (16, 17).

2. Ensemble à chaîne (1) selon la revendication 1, **caractérisé en ce qu'**un axe d'action (19) de la force de tension et l es axes longitudinaux (20, 21) des axes de guidage (16, 17) sont orientés parallèlement les uns par rapport aux autres.

3. Ensemble à chaîne (1) selon l'une quelconque des revendications précédentes, **caractérisé en ce que** les points de raccordement (22, 23) auxquels les axes de guidage (16, 17) sont raccordés au système de transmission (15), se trouvent sur une face arrière (26) du système de transmission (15), qui est opposée à une face avant (25) du système de transmission (15) par rapport à un axe d'action (19) de la force de tension sur lequel se trouve un point d'appui (24) sur lequel s'appuie l'élément de tension (10) avec sa deuxième extrémité (14) sur le système de transmission (15).

4. Ensemble à chaîne (1) selon l'une quelconque des revendications précédentes, **caractérisé en ce que** le système de transmission (15) est constitué de façon statique à la manière d'une poutre sur deux supports, sachant que les axes de guidage (16, 17) forment les éléments de support du système de transmission (15), sachant de préférence que les éléments de support sont disposés en avant en extrémité en opposition sur le système de transmission (15).

5. Ensemble à chaîne (1) selon la revendication 4, **caractérisé en ce qu'**un point d'appui (24) sur lequel l'élément de tension (10) s'appuie avec sa deuxième extrémité (14) sur le système de transmission (15) est au moins disposé pour l'essentiel au milieu entre les points de raccordement (22, 23) auxquels les axes de guidage (16, 17) sont raccordés au système de transmission (15).

6. Ensemble à chaîne (1) selon l'une quelconque des revendications précédentes, **caractérisé en ce que** le système de mesure d'extension (18) est disposé sur une face arrière (26) du système de transmission (15), qui est opposée à une face avant (25) du système de transmission (15), sachant qu'un point d'appui (24) sur lequel l'élément de tension (10) s'appuie avec sa deuxième extrémité (14) sur le système de transmission (15), se trouve sur la face avant (25) du système de transmission (15).

7. Ensemble à chaîne (1) selon les revendications 4 à 6, **caractérisé en ce que** le système de mesure d'extension (18) est disposé le long d'un axe d'action (19) de la force de tension en opposition au point d'appui (24) de la deuxième extrémité (14) de l'élément de tension (10) au moins pour l'essentiel au milieu du système de transmission (15) sur la face arrière (26) du système de transmission (15).

8. Ensemble à chaîne (1) selon l'une quelconque des revendications précédentes, **caractérisé par** un système d'évaluation (27), qui est relié de manière fonctionnelle d'une façon transmettant des données au système de mesure d'extension (18), sachant que le système d'évaluation (27) est prévu et agencé pour traiter au moyen du système de mesure d'extension (18) les informations saisies concernant la déformation du système de transmission (15).

9. Ensemble à chaîne (1) selon la revendication 8, **caractérisé en ce que** le système d'évaluation (27) est prévu et agencé pour évaluer en continu une déformation réelle du système de transmission (15) et décider d'une force de tension efficace de l'élément de tension (10) à partir de la déformation réelle du système de transmission.

10. Ensemble à chaîne (1) selon la revendication 9, **caractérisé en ce que** le système d'évaluation (27) est prévu et agencé pour transmettre automatiquement une information au cas où la force de tension devient inférieure à une valeur minimale prédéfinie.

11. Ensemble à chaîne (1) selon l'une quelconque des revendications précédentes, **caractérisé par** un actionneur (28) coopérant avec l'élément de commande (11), qui est prévu et agencé pour agir sur l'élément de commande (11) et modifier de ce fait la force de tension de l'élément de tension (10).

12. Ensemble à chaîne (1) selon les revendications 10 et 11, **caractérisé en ce que** l'actionneur (28) est relié d'une manière transmettant des données au système d'évaluation (27), sachant que le système d'évaluation (27) est prévu et agencé pour activer l'actionneur (28) au cas où la force de tension dépasse de façon inférieure la valeur minimale prédéfinie de telle manière que l'élément de commande (11) est réglé et la force de tension de l'élément de tension (10) est de ce fait augmentée.

13. Procédé destiné à faire fonctionner un ensemble à chaîne (1), l'ensemble à chaîne (1) comprenant
- une tête d'entraînement (2) avec une roue à chaîne (3) pouvant être entraînée en rotation autour d'un axe de rotation (6),
- une tête de renvoi (4) avec une unité de renvoi (5),
- une chaîne (8) fermée sur elle-même, rétreignant la roue à chaîne (3) et l'unité de renvoi (5),
- un système de tension (9) pour la tension de la chaîne (8),
sachant que la roue à chaîne (3) est entraînée en rotation au moyen d'un entraînement rotatif de telle manière que la chaîne (8) passe autour de la roue à chaîne (3) et de l'unité de renvoi (5),
le système de tension (9) comprenant
- au moins un élément de tension (10),
- au moins un élément de commande (11) pour régler une force de tension de l'élément de tension (10),
- une butée (12) contre laquelle l'élément de tension (11) s'appuie sur sa première extrémité (13),
- un système de transmission (15) contre lequel l'élément de tension (10) s'appuie sur sa deuxième extrémité (14),
- au moins deux axes de guidage (16, 17) raccordés au système de transmission (15), s'étendant parallèlement l'un à l'autre,
sachant que la force de tension initiée dans le système de transmission (15) en raison de l'appui de la deuxième extrémité (14) de l'élément de tension (10) est déviée au moyen du système de transmission (15) sur les deux axes de guidage (16, 17)
sachant que la roue à chaîne (3) ou l'unité de renvoi (5) est logée indirectement ou directement au moyen des axes de guidage (16, 17) de telle manière que la roue à chaîne (3) ou l'unité de renvoi (5) est poussée au moyen de la force de tension de l'élément de tension (10) contre la chaîne (8) et la chaîne (8) est tendue de ce fait à une tension de chaîne, **caractérisé par** un système de mesure d'extension (18),
qui est disposé sur le système de transmission (15) de telle manière qu'il est agencé pour saisir des informations concernant une déformation du système de transmission (15), qui survient en raison de l'effet de la force de tension et de la déviation de celle-ci vers les axes de guidage (16, 17),
sachant que des informations sont saisies en continu au moyen du système de mesure d'extension (18) concernant une déformation du système de transmission (15), qui survient en raison de l'effet de la force de tension et de la déviation de celle-ci vers les axes de guidage (16, 17).

14. Procédé selon la revendication 13, **caractérisé en ce que** les informations saisies sont traitées au moyen d'un système d'évaluation (27), sachant de préférence qu'en cas de constatation d'un dépassement inférieur d'une valeur minimale prédéfinie pour la force de tension de l'élément de tension (10) une information est automatiquement transmise.

15. Procédé selon la revendication 14, **caractérisé en ce qu'**un actionneur (28) qui coopère avec l'élément de commande (11), est activé au moyen du système d'évaluation (27), lorsque la valeur minimale pour la force de tension est dépassée de façon inférieure, sachant qu'au moyen de l'actionneur (28), l'élément de commande (11) est réglé de telle sorte que la force de tension de l'élément de tension (10) est augmentée.
